# FASCICULE DE BREVET EUROPEEN

(11) **EP 1 163 496 B1**
(45) Date de publication et mention de la délivrance du brevet: **16.06.2004**
(21) Numéro de dépôt: 00910951.3
(22) Date de dépôt: 15.03.2000
(51) Int. Cl.: G01F 23/00

(54) **DISPOSITIF DE DETECTION DE L'APPORT EN CARBURANT DANS UN RESERVOIR D'UN VEHICULE AUTOMOBILE**
VORRICHTUNG ZUM DETEKTIEREN DER KRAFTSTOFFABGABE IN EINEM FAHRZEUGBEHÄLTER
DEVICE FOR DETECTING FUEL INPUT IN A MOTOR VEHICLE TANK

(30) Priorité: 24.03.1999 FR 9903683
(43) Date de publication de la demande: 19.12.2001
(73) Titulaire: Peugeot Citroen Automobiles SA, 92200 Neuilly sur Seine (FR)
(72) Inventeur: CHANDEBOIS, Micha[l, F-93420 Villepinte (FR)
(74) Mandataire: Habasque, Etienne Joel Jean-François
(86) Numéro de dépôt international: PCT/FR2000/000627
(87) Numéro de publication internationale: WO 2000/057144

(56) Documents cités:
- EP-A- 0 810 113
- EP-A- 0 838 361
- DE-A- 19 537 024
- FR-A- 2 710 743
- GB-A- 2 272 894

## Description

La présente invention concerne un dispositif de détection de l'apport en carburant dans un réservoir d'un véhicule automobile.

Dans le cadre de l'intégration de diverses fonctionnalités dans les véhicules automobiles, il devient nécessaire de pouvoir détecter de manière fiable un apport en carburant dans le réservoir d'un véhicule.

Or, les dispositifs utilisés jusqu'à présent ne présentent pas une fiabilité absolue, car ils utilisent le signal de contact du véhicule pour déclencher une mesure de niveau de carburant dans le réservoir.

Le but de l'invention est donc de résoudre ces problèmes en proposant un tel dispositif.

A cet effet, l'invention a pour objet un dispositif de détection de l'apport en carburant dans un réservoir d'un véhicule automobile, caractérisé en ce qu'il comporte :
- des moyens de détection de l'état de marche ou d'arrêt du moteur du véhicule,
- des moyens de détection de la présence ou de l'absence d'un bouchon en position d'obturation du réservoir de carburant du véhicule,
- des moyens de mesure de la vitesse du véhicule,
- des moyens de relevé du niveau de carburant dans le réservoir, adaptés pour effectuer un premier relevé de niveau à la coupure du moteur ou au retrait du bouchon d'obturation du réservoir alors que la vitesse du véhicule est nulle et que le moteur du véhicule est en marche et un deuxième relevé à la mise en marche du moteur du véhicule ou à la mise en position d'obturation du bouchon du réservoir alors que la vitesse du véhicule est nulle, et que le moteur du véhicule est en marche, et
- des moyens de détection d'un apport éventuel de carburant dans le réservoir du véhicule à partir des premier et second relevés effectués.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un exemple de réalisation d'un dispositif de détection selon l'invention, et
- la Fig.2 représente un organigramme illustrant le fonctionnement de ce dispositif.

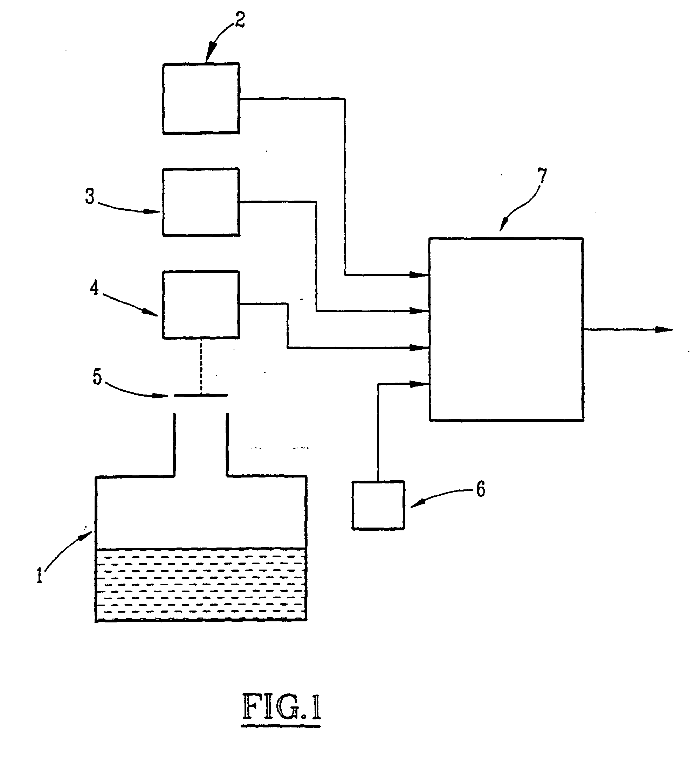

On a représenté sur cette figure 1, un dispositif de détection de l'apport en carburant dans un réservoir de véhicule automobile désigné par la référence générale 1.

Ce dispositif comporte des moyens de détermination de l'état de marche ou d'arrêt du moteur du véhicule, ces moyens étant désignés par la référence générale 2 et comprenant tout dispositif de détection approprié permettant de détecter le lancement ou la coupure du moteur du véhicule.

Le dispositif selon l'invention comporte également des moyens de mesure de la vitesse du véhicule, désignés par la référence générale 3, et des moyens, désignés par la référence générale 4, de détection de la présence ou de l'absence d'un bouchon, désigné par la référence générale 5 sur cette figure, en position d'obturation du réservoir de carburant 1 du véhicule.

Ces différents moyens peuvent présenter n'importe quelle structure appropriée connue dans l'état de la technique.

De plus, le dispositif selon l'invention comporte également des moyens de type classique de relevé du niveau de carburant dans le réservoir, ces moyens étant désignés par la référence générale 6.

Ces différents moyens sont reliés à une unité de traitement d'informations, désignée par la référence générale 7, permettant de délivrer une information d'apport de carburant dans le réservoir.

En fait, cette unité centrale de traitement d'informations 7 est adaptée pour piloter le fonctionnement du dispositif de manière à ce que les moyens de relevé de niveau de carburant 6 effectuent un premier relevé de niveau de carburant à la coupure du moteur du véhicule ou lors de la détection du retrait du bouchon d'obturation du réservoir alors que la vitesse du véhicule est nulle et que le moteur du véhicule est en marche et un second relevé à la mise en marche du moteur du véhicule ou à la mise en position d'obturation du bouchon du réservoir alors que la vitesse du véhicule est nulle et que le moteur de celui-ci est en marche.

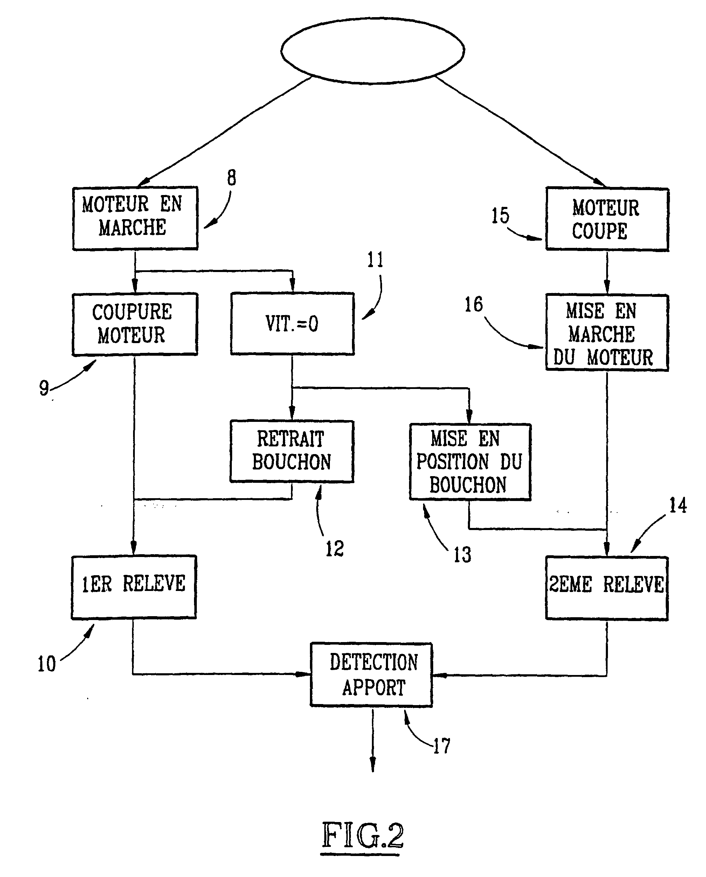

Ce fonctionnement est illustré sur la figure 2 où l'on peut constater que si le moteur du véhicule est en marche, comme cela est détecté lors de l'étape 8, à la coupure de ce moteur, comme cela est détecté lors de l'étape 9, on déclenche un premier relevé de niveau lors de l'étape 10.

Ce premier relevé peut également être déclenché alors que, le moteur est en marche, comme cela est détecté lors de l'étape 8, et que la vitesse du véhicule est égale à zéro, comme cela est détecté lors de l'étape 11, au moment du retrait du bouchon d'obturation, comme cela est détecté lors de l'étape 12.

Si l'on détecte la mise en position de ce bouchon en position d'obturation du réservoir lors d'une étape 13, alors que le moteur est en marche et que la vitesse du véhicule est égale à zéro, on déclenche un second relevé de niveau lors de l'étape 14.

Ce second relevé peut également être déclenché alors que le moteur du véhicule est coupé, comme cela est détecté lors de l'étape 15, lorsque l'on met en marche le moteur, comme cela est détecté lors de l'étape 16.

Ces premier et second relevés de niveau de carburant permettent alors de détecter un apport lors de l'étape 17.

Ce dispositif permet donc de réaliser deux relevés de niveau de carburant dans le réservoir du véhicule et à l'unité de traitement d'informations 7 de déterminer un apport éventuel de carburant dans le réservoir à partir de ces premier et second relevés.

Ceci permet de détecter un apport en carburant de manière extrêmement fiable dans toutes les situations possibles de vie du véhicule.

Les différents moyens entrant dans la constitution de ce dispositif de détection peuvent être des moyens classiques déjà intégrés dans les véhicules, les moyens de détection de la présence ou de l'absence du bouchon en position d'obturation du réservoir comprenant par exemple un capteur à interrupteur à lame souple de type classique.

Les autres moyens sont quant à eux déjà intégrés dans les véhicules et l'unité de traitement d'informations peut par exemple être formée par un calculateur déjà implanté dans le véhicule comme par exemple le calculateur de contrôle moteur de celui-ci.

## Revendications

1. Dispositif de détection de l'apport en carburant dans un réservoir d'un véhicule automobile, **caractérisé en ce qu'**il comporte :
- des moyens (2) de détection de l'état de marche ou d'arrêt du moteur du véhicule,
- des moyens (4) de détection de la présence ou de l'absence d'un bouchon (5) en position d'obturation du réservoir de carburant du véhicule,
- des moyens (3) de mesure de la vitesse du véhicule,
- des moyens (6) de relevé du niveau de carburant dans le réservoir (1), adaptés pour effectuer un premier relevé de niveau à la coupure du moteur ou au retrait du bouchon d'obturation du réservoir alors que la vitesse du véhicule est nulle et que le moteur du véhicule est en marche et un deuxième relevé à la mise en marche du moteur du véhicule ou à la mise en position d'obturation du bouchon du réservoir alors que la vitesse du véhicule est nulle et que le moteur du véhicule est en marche, et
- des moyens (7) de détection d'un apport éventuel de carburant dans le réservoir (1) du véhicule à partir des premier et second relevés effectués.

2. Dispositif selon la revendication 1, **caractérisé en ce que** les moyens (4) de détection de la présence ou de l'absence du bouchon en position d'obturation du réservoir comportent un capteur à interrupteur à lame souple.

3. Dispositif selon l'une quelconque des revendications précédentes, **caractérisé en ce que** les moyens de détection de l'apport en carburant comprennent une unité centrale de traitement d'informations (7).

## Patentansprüche

1. Vorrichtung zum Erfassung der Kraftstoffzufuhr in einen Vorratsbehälter eines Kraftfahrzeugs, **dadurch gekennzeichnet, dass** sie umfasst:
- Mittel (2) zum Erfassen des Lauf- oder Haltezustands des Motors des Fahrzeugs,
- Mittel (4) zum Erfassen des Vorhandenseins oder Fehlens eines in der Verschlussposition befindlichen Stopfens (5) für den Kraftstoffvorratsbehälter . des Fahrzeugs,
- Mittel (3) zum Messen der Geschwindigkeit des Fahrzeugs,
- Mittel (6) zum Anzeigen des Kraftstoffpegels in dem Vorratsbehälter (1), die so beschaffen sind, dass sie eine erste Pegelanzeige beim Ausschalten des Motors oder beim Entnehmen des Verschlussstopfens des Vorratsbehälters, wenn die Geschwindigkeit des Fahrzeugs null ist und der Motor des Fahrzeugs läuft, und eine zweite Anzeige beim Starten des Motors des Fahrzeugs oder beim Bringen des Stopfens des Vorratsbehälters in die Verschlussposition, wenn die Geschwindigkeit des Fahrzeugs null ist und der Motor des Fahrzeugs läuft, schaffen, und
- Mittel (7) zum Erfassen einer eventuellen Kraftstoffzufuhr in den Vorratsbehälter (1) des Fahrzeugs anhand der ersten und der zweiten geschaffenen Anzeige.

2. Vorrichtung nach Anspruch 1, **dadurch gekennzeichnet, dass** die Mittel (4) zum Erfassen des Vorhandenseins oder Fehlens des Stopfens in der Verschlussposition des Vorratsbehälters einen Ein/Aus-Sensor mit elastischer Lamelle umfassen.

3. Vorrichtung nach einem der vorhergehenden Ansprüche, **dadurch gekennzeichnet, dass** die Mittel zum Erfassen der Kraftstoffzufuhr eine Datenverarbeitungs-Zentraleinheit (7) zur umfassen.

## Claims

1. Device for detecting fuel input in a motor vehicle tank, **characterised in that** it covers:
- means (2) of detecting whether the engine of the vehicle is running or stopped;
- means (4) of detecting whether or not there is a cap (5) in position for closing the fuel tank of the vehicle;
- means (3) of measuring the speed of the vehicle;
- means (6) of finding the fuel level in the tank (1), adapted to taking a first level finding when the engine is switched off or the tank cap is removed while the speed of the vehicle is nil and the vehicle engine is running, and a second finding when the vehicle engine is started or the tank cap is put in the closing position while the speed of the vehicle is nil and the vehicle engine is running, and
- means (7) of detecting any input of fuel into the vehicle tank (1) from the first and second findings made.

2. Device according to Claim 1, **characterised in that** the means (4) of detecting that the cap is or is not in the tank closed position consist of a transducer with a flexible reed switch.

3. Device according to any one of the previous claims, **characterised in that** the means of detecting fuel input include a central data processing unit (7).
